Europäisches Patentamt

European Patent Office

Office européen des brevets

(11) Veröffentlichungsnummer: **0 502 469 A1**

# EUROPÄISCHE PATENTANMELDUNG

(21) Anmeldenummer: **92103600.0**

(22) Anmeldetag: **02.03.92**

(51) Int. Cl.5: **B60R 19/56**

(30) Priorität: **06.03.91 DE 4107111**
**21.01.92 DE 4201388**

(43) Veröffentlichungstag der Anmeldung:
**09.09.92 Patentblatt 92/37**

(84) Benannte Vertragsstaaten:
**DE ES FR GB IT**

(71) Anmelder: **Iveco Magirus Aktiengesellschaft**
**Schillerstrasse 2 Postfach 27 40**
**W-7900 Ulm/Donau(DE)**

(72) Erfinder: **Royal, Franz**
**Dornbäumlesweg 16**
**W-7910 Neu-Ulm(DE)**
Erfinder: **Wandura, Edwin**
**Kornhalde 17**
**W-7901 Staig(DE)**
Erfinder: **Keller, Harald**
**Alte Steige 22**
**W-7926 Steinenkirch(DE)**

(74) Vertreter: **Socha, Peter**
**Iveco Magirus AG Postfach 2740**
**Schillerstrasse 2**
**W-7900 Ulm(DE)**

(54) **Unterfahrschutz für Nutzfahrzeuge.**

(57) 2.1. Ein bekannter Unterfahrschutz sieht am Fahrzeugrahmen schwenkbar befestigte Stützarme vor, die auf jeder Fahrzeugseite vorgesehen und jeweils als planparalleles Viergelenk ausgebildet sind. Der Unterfahrschutz ist vergleichsweise schwergewichtig und als Stoßstange insbesondere mit integrierten Kennleuchten nicht geeignet.

2.2. Es wird ein Unterfahrschutz (1), insbesondere in hinterer Quererstreckung, zu einem Nutzfahrzeug (2) vorgeschlagen, wobei an den fahrzeugrahmenfernen Enden der Stützarme (5, 6) eine vorzugsweise fahrzeughinterseitige Stoßstange (11) angelenkt ist. Die Stützarme (5, 6) sind als planparalleles Viergelenk dergestalt angelenkt, daß die Stoßstange (11) sowohl in der oberen als auch in der unteren Schwenkendstellung im wesentlichen in der gleichen Vertikalebene liegt. Die Stoßstange (11) befestigt bevorzugt integrierte Kennleuchten, Kennzeichen oder dergl..

Fig. 1

EP 0 502 469 A1

Die Erfindung betrifft einen Unterfahrschutz für Nutzfahrzeuge mit am Fahrzeugrahmen schwenkbar befestigten Stützarmen, die auf jeder Fahrzeugseite vorgesehen sind und jeweils ein planparalleles Viergelenk bilden.

Aus der DE-OS 3 722 312 ist ein Unterfahrschutz für ein Nutzfahrzeug, insbesondere ein Kipperfahrzeug, bekannt, wobei der Unterfahrschutz im rückwärtigen Endbereich des Fahrzeugs nach oben gekippt werden kann, um im angehobenen Zustand ein Fahren im Gelände zu ermöglichen. Im angehobenen Zustand steht der Unterfahrschutz schräg und kann dann insbesondere in dem Falle, wenn an ihm selbst zweckmäßigerweise Heckleuchten oder dergl. angebracht sind, nicht gesetzliche Forderungen erfüllen, zumal dann die Heckleuchten oder dergl. nicht mehr den vorgeschriebenen Abstrahlwinkel bezogen auf die Horizontle hätten. Aus diesem Grunde ist der bekannte kippbare Unterfahrschutz für Fahrzeuge ungeeignet, die auch auf offener Straße mit angehobenem Unterfahrschutz zu betreiben sind, z.B. bei (schwerbeladenen) Fahrzeugen mit großen Federwegen oder bei Fahrzeugen mit blattgefederten Liftachsen, bei denen im abgesenkten Zustand der Liftachse die erforderliche Bodenfreiheit fehlt (vgl. auch DE-OS 24 26 552, GB 2 107 909 A).

Ferner ist aus DE-OS 28 43 670 ein Unterfahrschutz der eingangs genannten Art für ein Nutzfahrzeug bekannt, wobei am Fahrzeugrahmen schwenkbar befestigte Stützarme auf beiden Fahrzeugseiten vorgesehen sind, die jeweils ein planparalleles Viergelenk bilden. Die Anordnung ist so getroffen, daß der Unterfahrschutz bei angehobenem Viergelenk dicht unterhalb des Fahrzeugrahmens positioniert ist. Im abgesenkten Zustand steht der Unterfahrschutz hinter dem Fahrzeugrahmen vor. Der Unterfahrschutz ist für die Anbringung einer Stoßstange nur bedingt geeignet, da sich dieser im angehobenen Zustand unter dem Fahrzeugrahmen befindet, eine am Unterfahrschutz angebrachte separate, eine Knautschzone bildende Stoßstange mithin nicht an einer fahrzeughinterseitig vorstehenden Stelle angeordnet sein kann. Die hintere vertikale Schutzfläche des Unterfahrschutzes liegt im angehobenen und im abgesenkten Zustand des Unterfahrschutzes in unterschiedlichen Vertikalebenen. Dadurch ergeben sich Schwierigkeiten bei einem Rangieren des Nutzfahrzeuges, und es können nicht Kenn-,Heckleuchten oder dergl. an der Hinterseite des Rahmenschutzes angebracht werden, da diese je nach Liftstellung des Unterfahrschutzes in unterschiedlicher Vertikalebene positioniert, gesetzliche Forderungen also nicht erfüllt sind. Der bekannte Unterfahrschutz ist auch vergleichsweise schwergewichtig.

Aufgabe der Erfindung ist die Schaffung eines Unterfahrschutzes der eingangs genannten Art, welcher bei einfacher, leichtgewichtiger Struktur sehr zuverlässig im Betrieb und insbesondere für schwerbeladene Fahrzeuge sowie für Fahrzeuge mit blattgefederter Liftachse auch in einem sog. Off-Road-Betrieb auf offener Straße oder im Gelände geeignet ist, und das Fahrzeug gleichwohl vergleichsweise einfach rangiert und gekennzeichnet werden kann.

Gelöst wird die der Erfindung zugrundeliegende Aufgabe durch die im kennzeichnenden Teil des Anspruchs 1 angegebenen Merkmale.

Vorteilhaft weitergebildet wird der Erfindungsgegenstand durch die Unteransprüche 2 bis 20.

Wesen der Erfindung ist die Höhenverstellbarkeit einer insbesondere hinteren stabil am Fahrzeugrahmen befestigten vergleichsweise hochbeanspruchbaren Stoßstange, welche gleichwohl ein sehr geringes Gewicht aufweist, keine Kippbewegung bei einer Höhenverstellung erfährt und sowohl in der unteren als auch in der oberen Endstellung des verschwenkbaren Viergelenks praktisch in der gleichen Vertikalebene gelegen ist. Aufgrund dieser Bauweise läßt sich das Fahrzeug sowohl in der unteren als auch in der oberen Stellung des Unterfahrschutzes vergleichsweise leicht rangieren, und es können zweckmäßigerweise Kennleuchten, Kennzeichen oder dergl. an der Stoßstange angebracht werden, welche gesetzlichen Forderungen im In- und Ausland erfüllen. An der Stoßstange angebrachte Kennleuchten, Kennzeichen, etc. (grundsätzlich aus DE-GM 8 914 819 bekannt) liegen nämlich in beiden Endstellungen der höhenverstellbaren Stoßstange praktisch in der gleichen Vertikalebene.

Die vorgeschriebenen Kräfte, die auf den Unterfahrschutz aufzubringen sind, werden bei beladenem Fahrzeug bzw. im abgesenkten Zustand bei einer Liftachse vorzugsweise über die aneinander anliegenden Stützarme aus Vollmaterial oder U-Profilen eines planparallelen Viergelenks sowie vorzugsweise zusätzlich über eine Anlagefläche an der Konsole aufgenommen.

Die Stützarme können aber alternativ auch als im Querschnitt U-förmige Formteile ausgebildet sein, die ein geringes Gewicht aufweisen, wenig Einbauraum benötigen und gleichwohl auch stabil im Betrieb sind. Beide zugehörigen U-förmigen Formteile überlappen sich in der Basis und besitzen Anschlagflächen im Bereich der Schenkel des "U". Bei Aufbringung einer großen Kraft ordnen sich beide U-förmigen Profile dergestalt ineinander, daß sie ein hochstabiles Rechteckprofil bilden. Zugehörige Stützarme sind mit einer Gewichtsausgleichsfeder verbunden, welche vorzugsweise als Zugfeder ausgebildet ist.

Im angehobenen Zustand liegt das Unterfahrschutzprofil vorzugsweise an der Konsole selbst an, so daß die äußeren Kräfte direkt von der Konsole aufgenommen werden. Auftretende Querkräfte werden über die Stützarme auf die Konsole übertragen.

Zweckmäßigerweise ist eine sog. Zweipunkt-Arretierung vorgesehen, welche darin besteht, den Unterfahrschutz in der oberen sowie in der unteren Position mit Hilfe einfacher Mittel vorzugsweise von Hand zu fixieren. Arretierungshilfen sind grundsätzlich, beispielsweise aus US-PS 4 514 002 bekannt.

Durch die Erfindung ist somit die erforderliche Bodenfreiheit eines Unterfahrschutzes auch bei beladenem Fahrzeug bzw. im abgesenkten Zustand einer blattgefederten Liftachse mit Hilfe einfacher Mittel gewährleistet, und es kann das Fahrzeug sowohl auf normaler Straße als auch im Gelände betrieben werden. Mit Hilfe einfacher Mittel können gesetzliche Vorschriften eingehalten werden, z.B. der maximal zulässige Abstand des Unterfahrschutzprofiles vom Boden.

Sind Heckleuchten, beleuchtete Kennzeichen oder dergl. an der Stoßstange angebracht, so bleiben die Abstrahlwinkel der Beleuchtungseinrichtungen am Unterfahrschutz - bezogen auf die Horizontale - angesichts der Parallelverschiebung des Gestänges bzw. Viergelenks stets erhalten.

Sind gemäß einem weiteren Erfindungsmerkmal sämtliche Stützarme gleich ausgebildet, so ergeben sich große Kostenersparnisse bei Herstellung, Lagerhaltung und Montage.

Wenn auch die Erfindung wie vorstehend beschrieben in der Anwendung als fahrzeughinterseitige Unterfahrschutz ganz besondere Vorteile erbringt, umfaßt die Erfindung bei entsprechend angepaßter Ausbildung grundsätzlich auch eine Anwendung als anderweitiger, beispielsweise seitlicher, Unterfahrschutz.

Die Erfindung wird nachfolgend anhand von Ausführungsbeispielen unter Bezugnahme auf die beigefügte Zeichnung näher erläutert; es zeigen:

Fig. 1     einen Unterfahrschutz in der abgesenkten Schwenkendstellung in einem schematischen Vertikallängsschnitt eines Nutzfahrzeuges,

Fig. 2     den Unterfahrschutz nach Fig. 1 in der oberen Schwenkendstellung,

Fig. 3     einen anderen Unterfahrschutz in der abgesenkten Schwenkendstellung ähnlich Fig. 1,

Fig. 4     den Unterfahrschutz nach Fig. 3 in der oberen Schwenkendstellung ähnlich Fig. 2,

Fig. 5     die Stützarme der Fig. 4 in größerer schematischer Einzelheit,

Fig. 6     die Stützarme der Fig. 3 in größerer schematischer Einzelheit ähnlich Fig. 5, und

Fig. 7     eine Stirnansicht gesehen in Richtung X der Fig.5.

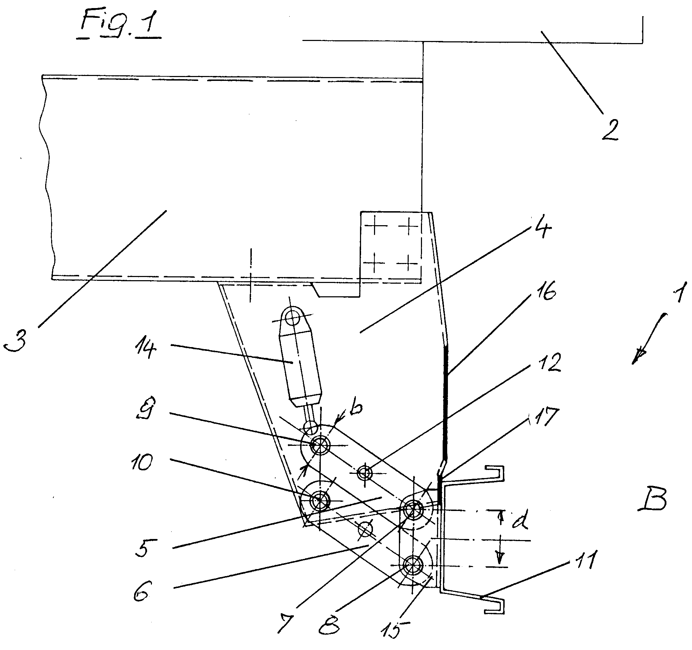

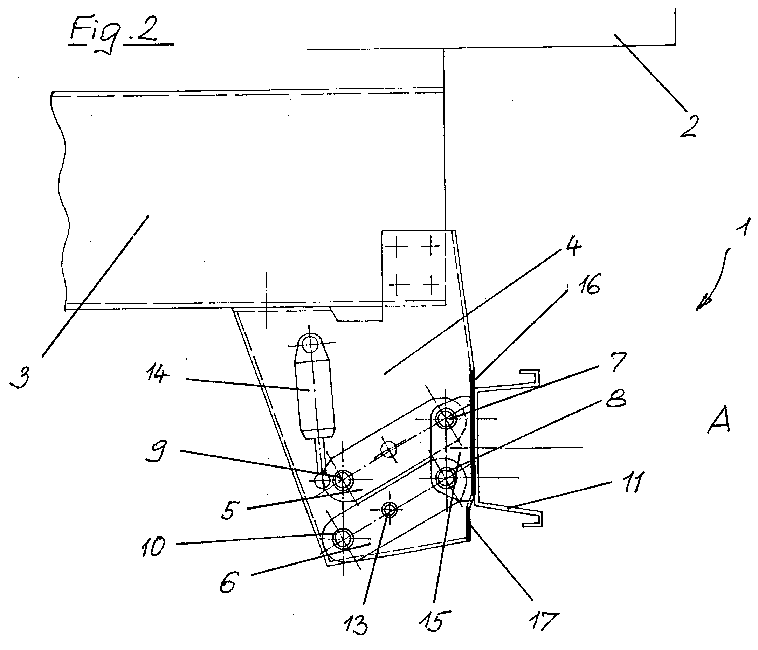

Gemäß den Fig. 1 und 2 befindet sich am hinteren Ende eines Nutzfahrzeuges (2) in Quererstreckung zum Fahrzeug ein Unterfahrschutz (1), welcher über zwei seitliche Konsolen (4) am Fahrzeugrahmen (3) unterseitig befestigt ist. Insbesondere sind die beiden seitlichen Konsolen (4) an den beiden seitlichen Längsträgern des Nutzfahrzeuges starr montiert.

Der Unterfahrschutz (1) umfaßt auf jeder Fahrzeugseite zwei übereinander angeordnete, gleich ausgebildete Stützarme (5, 6) in Form eines planparallelen Viergelenks, wobei an hinterster Stelle der beiden Stützarme (5, 6) eine Stoßstange (11) angelenkt ist, welche sich in Fahrzeugquerrichtung erstreckt.

Der obere Stützarm (5) sowie der untere Stützarm (6) des Viergelenks besitzen konsolenfeste obere und untere Anlenkpunkte (9, 10) sowie auf der anderen Seite obere und untere Anlenkpunkte (7, 8) in Richtung Stoßstange (11). Die Gesamtanordnung der Anlenkpunkte (7, 8) in Richtung Stoßstange (11), welche direkt im Abstand (d) übereinanderliegen,sowie der Anlenkpunkte (9, 10) an der Konsole (4), welche ebenfalls direkt übereinander im gleichen Abstand (d) liegen, ist so getroffen, daß die hintere Stoßstange (11) aus der in Fig. 1 gezeigten unteren Schwenkendstellung (B) in die in Fig. 2 gezeigte obere Schwenkendstellung (A) von Hand einer Bedienungsperson hochgeschwenkt und dort arretiert werden kann.

Im Bereich des oberen konsolenfesten Anlenkpunkts (9) des oberen Stützarms (5) befindet sich in exzentrischer Anlenkung eine Gewichtsausgleichsfeder (14), welche oberseitig an der Konsole (4) fahrzeugfest angelenkt ist. Die Gewichtsausgleichsfeder (14) ist derart dimensioniert, daß diese dem Eigengewicht des Viergelenks einschließlich Stoßstange (11) entgegenwirkt und den Unterfahrschutz (1) in jeder Schwenkstellung in etwa in der Schwebe hält.

Für eine automatische Betätigung des Unterfahrschutzes (1) kann anstelle der Gewichtsausgleichsfeder (14) oder zusätzlich zu dieser ein hydraulischer oder elektrischer Schwenkantrieb vorgesehen sein, der die Stoßstange (11) in der Höhe verstellt.

Jeder Stützarm (5, 6) besitzt an mittlerer Stelle eine obere Durchgangsbohrung (12) bzw. eine untere Durchgangsbohrung (13), welche mittels Arretierstift in einer ausgerichteten Gegenbohrung in der Konsole (4) arretiert werden können. Die Durchgangsbohrungen (12, 13) sowie der Schwenkmechanismus des Viergelenks ist so getroffen, daß bei einer einzigen Gegenbohrung in der Konsole entweder die obere Durchgangsbohrung (12) des oberen Stützarms (5) in Ausrichtung zur Gegenbohrung gemäß Fig. 1 gebracht werden kann oder die untere Durchgangsbohrung (13) des unteren Stützarms (6) gemäß Fig. 2, um jeweils mit dem gleichen Arretierstift eine Arretierung in der unteren Schwenkendlage (B) gemäß Fig. 1 oder in der oberen Schwenkendlage (A) gemäß Fig. 2 vorzunehmen.

In der oberen Schwenkendlage (A) liegt die hintere Vertikalfläche der Stoßstange (11) bündig an einer vertikalen Stützfläche (16) der fahrzeugfesten Konsole (4) an, so daß bei einer äußeren horizontalen Längskraft auf die Stoßstange (11) der obere und der untere Stützarm (5,6) und insbesondere die Anlenkpunkte (7 bis 10) im wesentlichen nicht durch Krafteinwirkung beansprucht werden.

Die Konsole (4) weist an unterster Vertikalerstreckung einen weiteren im wesentlichen vertikal verlaufenden Stützflächenabschnitt (17) auf, welcher als Anlagefläche für die Stoßstange (11) in ihrer unteren Schwenkendstellung (B) gemäß Fig. 1 dient. In letztgenannter Schwenkendstellung (B) befinden sich die zugewandten Längsseiten der Stützarme (5,6) des Viergelenks in dichter Anlage. Ersichtlich wird mithin gemäß Fig. 1 auch in der unteren Schwenkendstellung (B) der Stoßstange (11) ein stabiler Unterfahrschutz (1) eingerichtet, welcher gegen äußere Kräfte relativ unempfindlich ist, und gleichwohl eine leichte Verschwenkbarkeit der Stoßstange (11) gewährleistet ist.

Da die zugeordneten Anlenkpunkte (7, 8) auf der Stoßstangenseite und die anderen Anlenkpunkte (9, 10) auf der Konsolenseite exakt im gleichen Abstand übereinanderliegen, wird bei einer Verschwenkung der Stoßstange (11) diese bezüglich der Horizontalen nicht verstellt oder gekippt, wie dies bei bekannten verstellbaren Stoßstangen der Fall ist. An der Stoßstange (11) vorgesehene (nicht veranschaulichte) Heckleuchten werden mithin ebenfalls bezüglich der Horizontalen in keiner Schwenkstellung verstellt, so daß der Abstrahlwinkel der Beleuchtungseinrichtung nach hinten unverändert bleibt.

Der Abstand (d) zwischen zugehörigen Anlenkpunkten (7,8 und 9,10) entspricht in etwa der 1 1/2-fachen bis 2 1/2-fachen Breite (b) eines jeden Stützarms (5), die gleich ausgebildet sind.

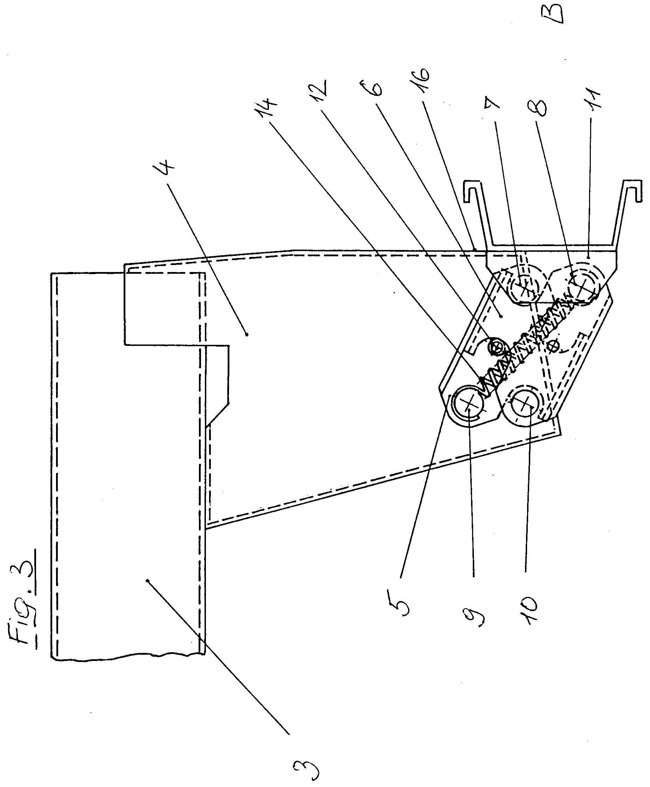

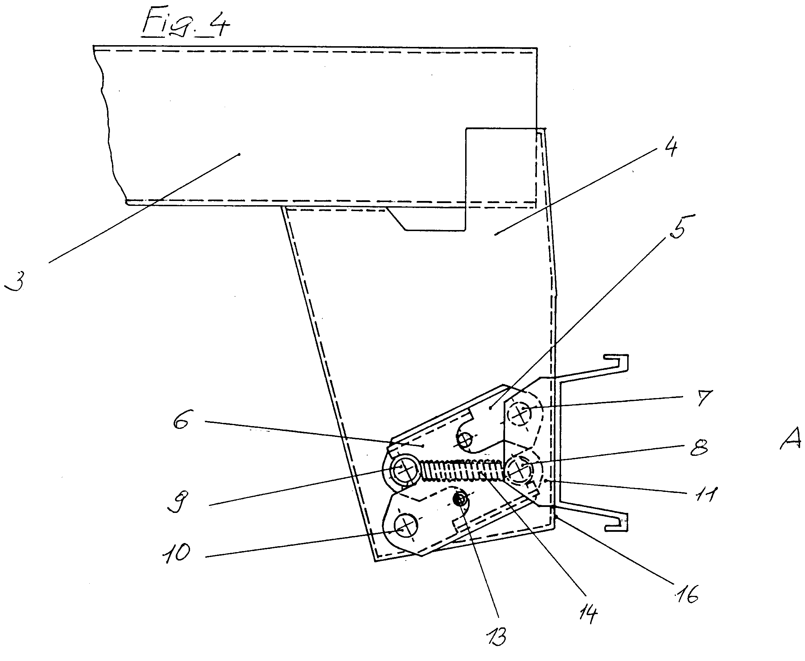

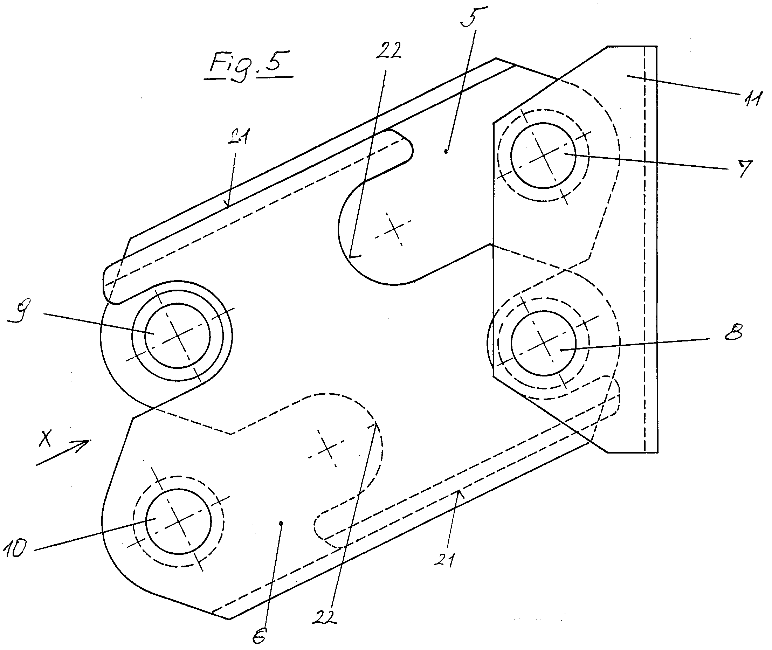

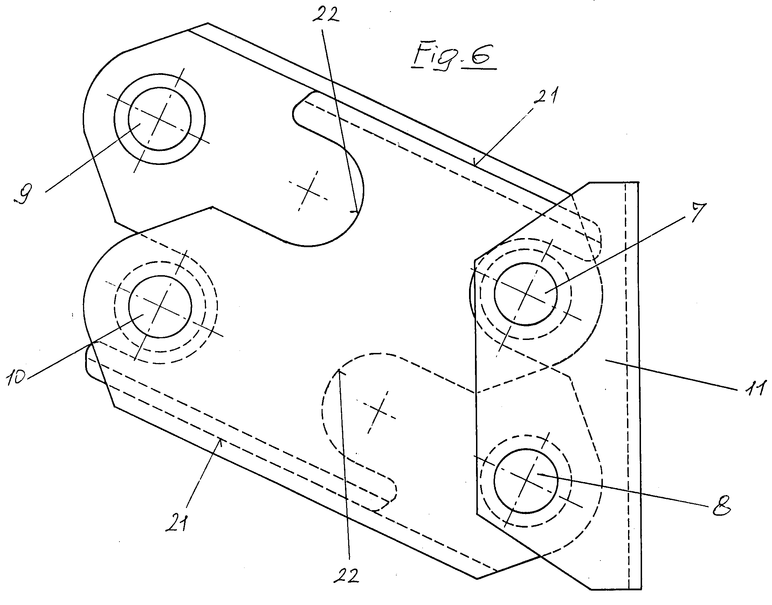

Im Gegensatz zu den Stützarmen (5, 6) der Fig. 1 und 2, welche stangenartig aus Vollmaterial oder als U-Profil ausgebildet sind, sind die Stützarme nach den Fig. 3 bis 7 im Querschnitt U-förmige Formteile,deren U-förmige Basisteile sich in den beiden Schwenkendstellungen (B und A) der Fig. 3 und 4 überlappen und deren U-förmige Schenkelprofile zumindest teilweise als Anschlagflächen (21) ausgebildet sind, die in den Schwenkendstellungen in einen gegenseitigen Eingriff bringbar sind. Bei Aufbringung einer großen Kraft verformen sich beide U-Profile ineinander und bilden ein sehr stabiles Rechteckprofil, welches ein geringes Gewicht aufweist.

Bei einer besonders stabilen und gleichwohl leichtgewichtigen und kompakten Anordnung der Stützarme besitzen die U-förmigen Basisteile halbkreisförmige Ausbuchtungen (22), welche benachbarte Lagerbolzen bzw. Anlenkstellen umgreifen und gegebenenfalls als zusätzliche Anschlagflächen ausgebildet sein können.

Die Ausbuchtungen (22) dienen ferner auch als Riegelflächen für eine Verriegelung mit Arretierungsstiften ähnlich Ausführungsvariante nach den Fig. 1 und 2.

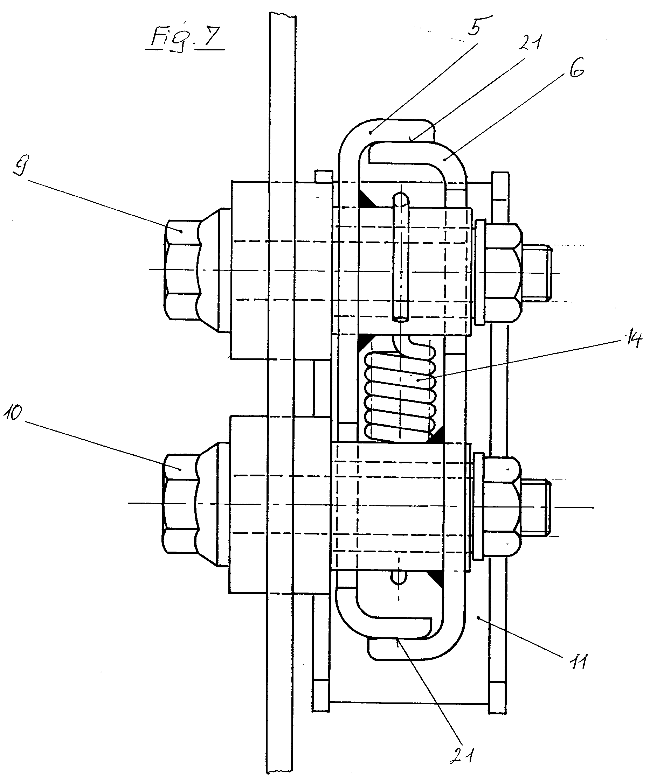

Während in der Ausführungsvariante nach den Fig. 1 und 2 als Ausgleichsfeder (14) eine Druckfeder vorgesehen ist, besorgt den Gewichtsausgleich im Ausführungsbeispiel nach den Fig. 3 bis 7 eine Zugfeder, welche zwischen der fahrzeugrahmenfesten Anlenkstelle (9) eines oberen Stützarms (5) und der stoßstangenseitigen Anlenkstelle (8) eines unteren zugeordneten Stützarms (6) gespannt ist. Aufgrund der U-förmigen Profilierung der Stützarme kann die Zugfeder kompakt im inneren Hohlraum beider Stützarme (5,6) aufgenommen werden, wie dies der Fig. 7 zu entnehmen ist. Dadurch entfällt die Ausbildung einer Vertiefung in der Konsole (4), welche zur Unterbringung der Druckfeder gemäß den Fig. 1 und 2 von Nöten ist. Auch ergibt sich durch die Zugfeder eine Gewichts- und eine Kostenersparnis im Vergleich zu einer Druckfeder.

Dadurch, daß die Anschlagflächen zwischen den beiden U-förmigen Profilen vergleichsweise groß sind, ergeben sich kaum und insbesondere keine sichtbaren Farbabschürfungen an den Berührungsflächen zwischen den Stützarmen (5 und 6).

Die Stoßstange (11) nach dem Ausführungsbeispiel der Fig. 3 bis 7 liegt sowohl in der unteren als auch in der oberen Schwenkendstellung satt an der zugehörigen Vertikalwand der Konsole (4) an, ohne Ausbildung einer Kröpfung gemäß Ausführungsbeispiel nach den Fig. 1 und 2. Durch die Entfernung der Kröpfung erspart man sich die Herstellung einer Bohrung, einer Schweißung und ein separates Abkanten des unteren Bereichs des Konsolenanschlages.

In der unteren Schwenkendstellung (B) gemäß Fig.3 (bzw. Fig. 1) befindet sich der Arretierstift der Arretierungsvorrichtung im Bereich des oberen Stützarms (5). Dieser verhindert ein Verschieben des Unterfahrschutzes nach oben und nach hinten. In der oberen Schwenkendstellung (A) gemäß Fig. 4 (bzw. Fig. 2) befindet sich der Arretierungsstift demgegenüber im Bereich des unteren Stützarms (6). Dieser verhindert ein Verschieben des Unterfahrschutzes nach unten und nach hinten.

Alle in der Beschreibung erwähnten und/oder in der Zeichnung dargestellten neuen Merkmale allein oder in sinnvoller Kombination sind erfindungswesentlich, auch soweit sie in den Ansprüchen nicht ausdrücklich beansprucht sind.

**Patentansprüche**

1. Unterfahrschutz (1) für Nutzfahrzeuge (2) mit am Fahrzeugrahmen (3) schwenkbar befestigten Stützarmen (5,6), die auf jeder Fahrzeugseite vorgesehen sind und jeweils ein planparalleles Viergelenk bilden, dadurch gekennzeichnet, daß an den fahrzeugrahmenfernen Enden der Stützrahmen (5,6) eine vorzugsweise fahrzeughinterseitige Stoßstange (11) angelenkt ist, wobei die beiden Stützarme (5,6) übereinander dergestalt angeordnet sind, daß sowohl die beiden endseitigen Anlenkpunkte (7, 8) der Stützarme (5,6) an der Stoßstange (11) als auch die beiden fahrzeugfesten anderen endseitigen Anlenkpunkte (9,10) der Stützarme (5,6) in gleichem Abstand (d) im wesentlichen übereinanderliegen.

2. Unterfahrschutz nach Anspruch 1, dadurch gekennzeichnet, daß der Abstand (d) in etwa der 1 1/2-fachen bis 2 1/2-fachen Breite (b) der Stützarme (5,6) entspricht.

3. Unterfahrschutz nach Anspruch 1 oder 2, dadurch gekennzeichnet, daß die beiden fahrzeugfesten Anlenkpunkte (9, 10) an einer fahrzeughinterseitigen rahmenfesten Konsole (4) vorgesehen sind.

4. Unterfahrschutz nach Anspruch 3, dadurch gekennzeichnet, daß die Stoßstange (11) in ihrer oberen Schwenkendstellung (A) an einer im wesentlichen vertikalen Stützfläche (16) der Konsole (4) anliegt.

5. Unterfahrschutz nach Anspruch 3 oder 4, dadurch gekennzeichnet, daß die Stoßstange (11) in ihrer unteren Schwenkendstellung (B) an einem weiteren Stützflächenabschnitt (17) der Konsole (4) anliegt.

6. Unterfahrschutz nach einem der Ansprüche 1 bis 5, dadurch gekennzeichnet, daß mit zumindest einem Stützarm (5,6) eine am Fahrzeugrahmen (3) bzw. an der rahmenfesten Konsole (4) angelenkte Gewichtsausgleichsfeder (14) gelenkig verbunden ist, welche die Stützarme (5,6) einschließlich Stoßstange (11) in jeder Schwenklage im wesentlichen in der Schwebe hält.

7. Unterfahrschutz nach einem der Ansprüche 1 bis 6, dadurch gekennzeichnet, daß mit zumindest einem Stützarm (5 bzw. 6) ein am Fahrzeugrahmen (3) bzw. an der rahmenfesten Konsole (4) angelenkter fremdenergiebetätigter Schwenkantrieb zum Verschwenken der Stoßstange (11) gelenkig verbunden ist.

8. Unterfahrschutz nach Anspruch 7, dadurch gekennzeichnet, daß der Schwenkantrieb und die Gewichtsausgleichsfeder (14) baulich vereint ausgebildet sind (Fig. 1 und 2).

9. Unterfahrschutz nach einem der Ansprüche 1 bis 8, dadurch gekennzeichnet, daß eine Arretierungsvorrichtung für eine Arretierung der Stoßstange (11) zumindest in ihrer oberen Schwenkendstellung (A) vorgesehen ist.

10. Unterfahrschutz nach Anspruch 9, dadurch gekennzeichnet, daß die Arretierungsvorrichtung zumindest eine Durchgangsbohrung (12, 13) in zumindest einem Stützarm (5 bzw. 6) und zumindest eine konsolenfeste bzw. fahrzeugrahmenfeste Gegenbohrung aufweist, welche in gegenseitiger Ausrichtung zueinander in einen Eingriff mit einem Arretierstift bringbar sind.

11. Unterfahrschutz nach Anspruch 10, dadurch gekennzeichnet, daß jeder Stützarm (5 bzw. 6) eine obere bzw. untere Durchgangsbohrung (12 bzw. 13) besitzt, wobei die untere Bohrung (13) in der oberen Schwenkendstellung (A) und die obere Bohrung (12) in der unteren Schwenkendstellung (B) der Stoßstange (11) mit einer konsolen- bzw. fahrzeugrahmenfesten Gegenbohrung in eine Ausrichtung für eine Verriegelung mit einem Arretierstift bringbar sind.

12. Unterfahrschutz nach einem der Ansprüche 1 bis 11, dadurch gekennzeichnet, daß beide Stützarme (5, 6) stangenartig aus Vollmaterial mit einem rechteckigen oder quadratischen Querschnittsprofil oder als U-Profil ausgebildet sind, wobei beide Stützarme in der unteren Schwenkendstellung (B) der Stoßstange (11) längsseitig aneinanderliegen.

13. Unterfahrschutz nach einem der Ansprüche 1 bis 11, dadurch gekennzeichnet,

daß beide Stützarme (5,6) im Querschnitt U-förmige Formteile sind, die sich in den beiden Schwenkendstellungen (A, B) im Bereich der U-förmigen Basis teilweise überlappen.

14. Unterfahrschutz nach Anspruch 13, dadurch gekennzeichnet, daß die U-förmigen Formteile im Bereich der Schenkel des "U" Anschlagflächen (21) besitzen, die in den beiden Schwenkendstellungen (A, B) in einen gegenseitigen Eingriff bringbar sind.

15. Unterfahrschutz nach einem der Ansprüche 6 bis 14, dadurch gekennzeichnet, daß die Gewichtsausgleichsfeder (14) eine Zugfeder ist, welche zwischen der fahrzeugrahmenfesten Anlenkstelle (9) des oberen Stützarms (5) und der stoßstangenseitigen Anlenkstelle (8) des unteren Stützarms (6) verspannt ist (Fig. 3, 4, 7).

16. Unterfahrschutz nach einem der Ansprüche 13 bis 15, dadurch gekennzeichnet, daß die Formteile im Bereich der U-förmigen Basis Ausbuchtungen (22) besitzen, die die vertikal beabstandete Anlenkstelle des anderen Formteils in einer Schwenkendstellung umgreift.

17. Unterfahrschutz nach Anspruch 16, dadurch gekennzeichnet, daß die Ausbuchtungen (22) Anschlagflächen umfassen, die mit der vertikal beabstandeten Anlenkstelle des anderen Formteils in einer Schwenkendstellung in Eingriff bringbar sind.

18. Unterfahrschutz nach einem der Ansprüche 13 bis 17, dadurch gekennzeichnet, daß die Ausbuchtungen (22) Riegelflächen für einen Arretierungseingriff mit einem Arretierungsstift einer Arretierungsvorrichtung umfassen, welche zwecks Arretierung der Stoßstange (11) in der oberen und/oder unteren Schwenkendstellung vorgesehen ist.

19. Unterfahrschutz nach einem der Ansprüche 1 bis 18, dadurch gekennzeichnet, daß an der Stoßstange (11) Kennleuchten, Kennzeichen oder dergl. im wesentlichen in einer Vertikalebene angebracht sind.

20. Unterfahrschutz nach einem der Ansprüche 1 bis 19,

dadurch gekennzeichnet, daß sämtliche Stützarme (5, 6) gleich ausgebildet sind.

Fig.1

Fig. 2

EP 0 502 469 A1

Fig. 3

EP 0 502 469 A1

Fig. 4

Fig.5

EP 0 502 469 A1

Fig.6

Fig. 7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| D,A | DE-A-2 843 670 (DAIMLER-BENZ AG)<br><br>* Seite 5, Zeile 11 - Zeile 27; Anspruch 5; Abbildungen 1,2 *<br>--- | 1,3,6-9, 15,20 | B60R19/56 |
| A | US-A-4 105 237 (VIALL SR. ET AL.)<br>* Spalte 2, Zeile 34 - Zeile 49 *<br><br>----- | 3,7,12 | |
| | | | **RECHERCHIERTE SACHGEBIETE (Int. Cl.5 )**<br><br>B60R |

Der vorliegende Recherchenbericht wurde für alle Patentansprüche erstellt

| Recherchenort | Abschlußdatum der Recherche | Prüfer |
|---|---|---|
| DEN HAAG | 10 JUNI 1992 | AREAL CALAMA A. |